# EUROPEAN PATENT APPLICATION

(11) **EP 4 775 955 A1**
(43) Date of publication of application: **15.07.2026**
(21) Application number: 26150037.5
(22) Date of filing: 02.01.2026
(51) Int. Cl.: G01N 21/03, G01N 21/39, G02B 6/36, G01N 21/05

(54) **BROADBAND RESONANT CAVITY SPECTROSCOPY GAS CELL, SYSTEM COMPRISING THIS GAS CELL AND METHOD USING THE SAME**

(30) Priority: 13.01.2025 IN 202511003019; 11.12.2025 US 202519416809
(71) Applicant: Honeywell International Inc., Charlotte, NC 28202 (US)
(72) Inventor: FENG, Chen, Charlotte, 28202 (US); TRIPATHY, Janmejaya, Charlotte, 28202 (US); HOYT, Chad, Charlotte, 28202 (US); BROWN, Andy Walker, Charlotte, 28202 (US); SHAFAI, Moin S., Charlotte, 28202 (US)
(74) Representative: Haseltine Lake Kempner LLP

(57) **Abstract**

The present disclosure provides a spectroscopic gas cell comprising a cylindrical body defining a chamber for receiving gas to be analyzed, an inlet for adding gas to the chamber, an outlet for removing gas from the chamber, an optical fiber input port closing a first end of the cylindrical body and adapted to connect to a first optical fiber ferrule to input laser light into the chamber, an optical fiber output port closing a second end of the cylindrical body and adapted to connect to a second optical fiber ferrule, a first off-axis ellipsoidal reflector positioned within the input port to reflect laser light from the first ferrule into the chamber, and a second off-axis ellipsoidal reflector positioned within the output port to reflect laser light from the chamber toward the second ferrule.

## Description

### CROSS-REFERENCE TO RELATED APPLICATIONS

This application claims priority to India Patent Application No. 202511003019, titled INTEGRATED BROADBAND RESONANT CAVITY ENHANCED SPECTROSCOPY GAS SENSING, filed January 13, 2025, which is hereby incorporated by reference in its entirety.

### FIELD OF INVENTION

The present disclosure relates to spectroscopic gas sensing systems, and more particularly to a broadband resonant cavity enhanced spectroscopy gas cell.

### BACKGROUND

Spectroscopic gas sensing systems are widely used for detecting and analyzing various gas species in industrial, environmental, and safety applications. These systems typically employ laser light to interact with gas molecules, where specific wavelengths are absorbed by target gases according to their molecular structure. The absorption characteristics provide a spectroscopic signature that enables identification and quantification of gas concentrations.

Resonant cavity enhanced spectroscopy represents an advanced approach that increases the effective optical path length by confining laser light within a high-finesse optical cavity. In such systems, laser light undergoes multiple reflections between highly reflective mirrors, effectively extending the interaction distance between the light and gas molecules from the physical cavity length to several kilometers. This enhancement dramatically improves sensitivity, enabling detection of trace gas concentrations at parts-per-million or parts-per-billion levels.

Conventional resonant cavity systems face limitations when attempting to operate across broad wavelength ranges. Many gas sensing applications require detection of multiple gas species, each having distinct absorption wavelengths. Traditional optical coupling systems rely on refractive lens assemblies to focus diverging light from optical fibers into the resonant cavity. However, these lens-based systems suffer from chromatic aberration, where different wavelengths focus at different positions, limiting effective operation to narrow spectral bands or single wavelengths.

The chromatic aberration problem becomes particularly pronounced in broadband applications where multiple wavelengths must be simultaneously coupled into the resonant cavity with high efficiency. Achromatic lens designs can partially address this issue for a limited number of wavelengths, but cannot provide the broadband performance needed for comprehensive multi-gas detection systems. This limitation often necessitates multiple separate sensors or frequent recalibration and refocusing when switching between different target gases.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Various embodiments described herein relate to spectroscopic gas cell and systems and methods system for gas spectroscopy.

According to an aspect of the present disclosure, a spectroscopic gas cell is provided. The spectroscopic gas cell comprises a cylindrical body defining a chamber for receiving a gas to be analyzed. The spectroscopic gas cell comprises an inlet via which the gas to be analyzed is added to the chamber. The spectroscopic gas cell comprises an outlet via which the gas to be analyzed is removed from the chamber. The spectroscopic gas cell comprises an optical fiber input port affixed to and closing off a first end of the cylindrical body and adapted to selectively connect to a first optical fiber ferrule to input laser light into the chamber. The spectroscopic gas cell comprises an optical fiber output port affixed to and closing off a second end of the cylindrical body and adapted to selectively connect to a second optical fiber ferrule. The spectroscopic gas cell comprises a first off-axis ellipsoidal reflector positioned within the optical fiber input port and positioned to reflect laser light from the first optical fiber ferrule into the chamber. The spectroscopic gas cell comprises a second off-axis ellipsoidal reflector positioned within the optical fiber output port and positioned to reflect the laser light from the chamber toward the second optical fiber ferrule to output the laser light from the chamber.

According to other aspects of the present disclosure, the gas cell may include one or more of the following features. Each of the first and second off-axis ellipsoidal reflectors may comprise aluminum. Each of the first and second off-axis ellipsoidal reflectors may comprise silver-coated aluminum. Each of the first and second off-axis ellipsoidal reflectors may have a radius of curvature of about two millimeters and a conic constant of about 0.9. Each of the first and second off-axis ellipsoidal reflectors may have a radius of curvature of 1.967 millimeters and a conic constant of 0.936. The first off-axis ellipsoidal reflectors may be adapted to reflect the laser light such that a waist of the laser light is positioned about midway between the first second off-axis ellipsoidal reflector and the second off-axis ellipsoidal reflector. Each of the optical fiber input port and the optical fiber output port may have five-degree-of-freedom of adjustment.

According to another aspect of the present disclosure, a system for gas spectroscopy is provided. The system comprises a laser light emitter for emitting laser light. The system comprises a first optical fiber cable having a first end connected to the laser light emitter and a second end connected to a first optical fiber ferrule. The system comprises a laser light receiver for receiving the laser light. The system comprises a second optical fiber cable having a first end connected to a second optical fiber ferrule and a second end connected to the laser light receiver. The system comprises a spectroscopic gas cell comprising a cylindrical body defining a chamber for receiving a gas to be analyzed, an inlet via which the gas to be analyzed is added to the chamber, an outlet via which the gas to be analyzed is removed from the chamber, an optical fiber input port affixed to and closing off a first end of the cylindrical body and connected to the first optical fiber ferrule to input the emitted laser light into the chamber, an optical fiber output port affixed to and closing off a second end of the cylindrical body and connected to the second optical fiber ferrule, a first off-axis ellipsoidal reflector positioned within the optical fiber input port and positioned to reflect laser light from the first optical fiber ferrule into the chamber, and a second off-axis ellipsoidal reflector positioned within the optical fiber output port and positioned to reflect the laser light from the chamber toward the second optical fiber ferrule to output the laser light from the chamber.

According to other aspects of the present disclosure, the system may include one or more of the following features. Each of the first and second off-axis ellipsoidal reflectors may comprise aluminum. Each of the first and second off-axis ellipsoidal reflectors may comprise silver-coated aluminum. Each of the first and second off-axis ellipsoidal reflectors may have a radius of curvature of about two millimeters and a conic constant of about 0.9. Each of the first and second off-axis ellipsoidal reflectors may have a radius of curvature of 1.967 millimeters and a conic constant of 0.936. The first off-axis ellipsoidal reflectors may be adapted to reflect the laser light such that a waist of the laser light is positioned about midway between the first second off-axis ellipsoidal reflector and the second off-axis ellipsoidal reflector. Each of the optical fiber input port and the optical fiber output port may have five-degree-of-freedom of adjustment.

According to another aspect of the present disclosure, a method of gas spectroscopy is provided. The method comprises providing a spectroscopic gas cell comprising a cylindrical body defining a chamber for receiving a gas to be analyzed, an inlet via which the gas to be analyzed is added to the chamber, an outlet via which the gas to be analyzed is removed from the chamber, an optical fiber input port affixed to and closing off a first end of the cylindrical body, an optical fiber output port affixed to and closing off a second end of the cylindrical body, a first off-axis ellipsoidal reflector positioned within the optical fiber input port, and a second off-axis ellipsoidal reflector positioned within the optical fiber output port. The method comprises connecting a laser light emitter to the optical fiber input port via a first optical fiber cable having a first end connected to the laser light emitter and a second end connected to a first optical fiber ferrule. The method comprises connecting a laser light receiver to the optical fiber output port via a second optical fiber cable having a first end connected to a second optical fiber ferrule and a second end connected to the laser light receiver. The method comprises emitting broadband laser light from the laser light emitter such that the emitted laser light enters the optical fiber input port via the first optical fiber ferrule. The emitted laser light that enters the optical fiber input port is reflected by the first off-axis ellipsoidal reflector into the chamber. The laser light reflected into the chamber by the first off-axis ellipsoidal reflector reflects off the second off-axis ellipsoidal reflector toward the second optical fiber ferrule to output the laser light from the chamber.

According to other aspects of the present disclosure, the method may include one or more of the following features. Each of the first and second off-axis ellipsoidal reflectors may comprise silver-coated aluminum. Each of the first and second off-axis ellipsoidal reflectors may have a radius of curvature of about two millimeters and a conic constant of about 0.9. Each of the first and second off-axis ellipsoidal reflectors may have a radius of curvature of 1.967 millimeters and a conic constant of 0.936. The first off-axis ellipsoidal reflectors may be adapted to reflect the laser light such that a waist of the laser light is positioned about midway between the first second off-axis ellipsoidal reflector and the second off-axis ellipsoidal reflector. The method may further comprise adjusting a position of the optical fiber input port and/or the optical fiber output port.

The foregoing general description of the illustrative embodiments and the following detailed description thereof are merely exemplary aspects of the teachings of this disclosure and are not restrictive.

### BRIEF DESCRIPTION OF FIGURES

The description of the illustrative embodiments is read in conjunction with the accompanying figures. It will be appreciated that, for simplicity and clarity of illustration, elements illustrated in the figures have not necessarily been drawn to scale, unless described otherwise. For example, the dimensions of some of the elements is exaggerated relative to other elements, unless described otherwise. Embodiments incorporating teachings of the present disclosure are shown and described with respect to the following figures presented herein.
FIG. 1 illustrates an isometric view of a spectroscopy gas cell, according to aspects of the present disclosure.
FIG. 2 illustrates a cross-sectional view of the spectroscopy gas cell of FIG. 1, according to aspects of the present disclosure.
FIG. 3 illustrates a partially exploded isometric view of the spectroscopy gas cell of FIG. 1, according to aspects of the present disclosure.
FIG. 4 illustrates an exploded isometric view of the spectroscopy gas cell of FIG. 1 with adjustment components, according to aspects of the present disclosure.
FIG. 5A illustrates an isometric view of an off-axis ellipsoidal reflector, according to aspects of the present disclosure.
FIG. 5B illustrates a cross-sectional view of the off-axis ellipsoidal reflector of FIG. 5A, according to aspects of the present disclosure.
FIG. 6 illustrates a block diagram of a control device for the spectroscopy gas cell system, according to aspects of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures are embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase is included in at least one embodiment of the present disclosure and is included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase is included in at least one example of the present disclosure and is included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature is optionally included in some examples, or it is excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information is transmitted to and/or received from these elements or components.

The term "component" may refer to an article, a device, or an apparatus that may comprise one or more surfaces, portions, layers and/or elements. For example, an example component may comprise one or more substrates that provide underlying layer(s) for the component and may comprise one or more elements that may form part of and/or are disposed on top of the substrate. In the present disclosure, the term "element" may refer to an article, a device, or an apparatus that may provide one or more functionalities.

Resonant cavity enhanced spectroscopy provides a technique for extending effective optical path lengths within compact gas sensing devices. In conventional spectroscopic gas detection, the sensitivity of measurement depends on the interaction path length between laser light and gas molecules. A resonant cavity may enable laser light to bounce between highly reflective mirrors multiple times, creating an effective optical path length that may be orders of magnitude longer than the physical dimensions of the cavity. For example, a resonant cavity with physical dimensions of approximately 75 millimeters may achieve an effective optical path length exceeding 1000 meters through multiple reflections.

Traditional resonant cavity systems face limitations when attempting broadband operation across multiple wavelengths. Conventional fiber optic coupling systems typically employ refractive lens assemblies to focus and collimate laser light between optical fibers and the resonant cavity. These lens-based systems suffer from chromatic aberration, where different wavelengths of light focus at different positions. This chromatic aberration restricts the system to operation at single wavelengths or, at most, a few discrete wavelengths that can be matched through achromatic lens combinations. Such limitations require multiple separate sensors for detecting different gas species, each optimized for specific wavelengths.

A spectroscopic gas cell may overcome these limitations through the use of reflective optics instead of refractive lens systems. Reflective optics, such as ellipsoidal reflective surfaces with metallic coatings, treat all wavelengths substantially equally without introducing chromatic aberration. This approach may enable broadband operation across a wide range of wavelengths within a single device. The system may achieve broadband operation with no chromatic aberration over the broadband wavelength range due to the reflective optics design.

A system for gas spectroscopy may provide enhanced sensitivity for trace gas detection applications. The system may be designed for low concentration and hard to detect multi-gas detection applications to replace conventional designs requiring multiple sensors. Such applications may include detection of toxic gases at parts-per-million (PPM) or parts-per-billion (PPB) concentration levels, where weak absorption coefficients necessitate extended optical path lengths for adequate sensitivity.

A method of gas spectroscopy may utilize the broadband capabilities of reflective optic systems to analyze multiple gas species sequentially or simultaneously. The method may enable detection of various targeted gases without requiring reconfiguration of the optical system or replacement of wavelength-specific components. This approach may reduce system complexity and cost while expanding the range of detectable gas species within a single instrument.

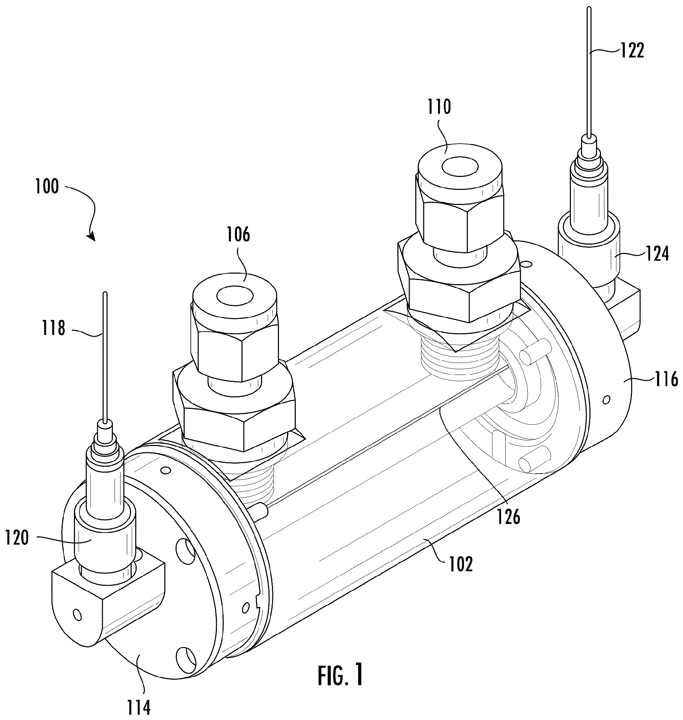

Referring to FIG. 1, a spectroscopy gas cell 100 may be configured for broadband resonant cavity enhanced spectroscopy applications. The spectroscopy gas cell 100 includes a cylindrical body 102 that defines a chamber for receiving a gas to be analyzed. The cylindrical body 102 may form the main structural element of the spectroscopy gas cell 100 and may provide mechanical support for the optical and gas handling components.

The spectroscopy gas cell 100 may include a gas inlet 106 positioned on the cylindrical body 102. The gas inlet 106 may serve as an inlet via which the gas to be analyzed is added to the chamber defined by the cylindrical body 102. The spectroscopy gas cell 100 may also include a gas outlet 110 positioned on the cylindrical body 102. The gas outlet 110 may function as an outlet via which the gas to be analyzed is removed from the chamber. The gas inlet 106 and gas outlet 110 may enable controlled introduction and removal of gas samples for spectroscopic analysis.

The spectroscopy gas cell 100 may include an optical fiber input port 114 positioned at one end of the cylindrical body 102. The optical fiber input port 114 may be affixed to and may close off a first end of the cylindrical body 102. The optical fiber input port 114 may be adapted to selectively connect to a first optical fiber ferrule to input laser light into the chamber. In some cases, the optical fiber input port 114 may provide the interface for coupling laser light from external sources into the spectroscopy gas cell 100.

The spectroscopy gas cell 100 may further include an optical fiber output port 116 positioned at the opposite end of the cylindrical body 102. The optical fiber output port 116 may be affixed to and may close off a second end of the cylindrical body 102. The optical fiber output port 116 may be adapted to selectively connect to a second optical fiber ferrule. The optical fiber output port 116 may enable collection of laser light that has passed through the chamber and interacted with the gas sample.

As shown in FIG. 1, a first optical fiber cable 118 may be connected to the optical fiber input port 114. The first optical fiber cable 118 may have a first end connected to a laser light emitter and a second end connected to a first optical fiber ferrule 120. The first optical fiber ferrule 120 may provide the interface for coupling laser light from the first optical fiber cable 118 into the spectroscopy gas cell 100 through the optical fiber input port 114. In some cases, the first optical fiber ferrule 120 may be configured to mate with the optical fiber input port 114 to establish optical communication between the first optical fiber cable 118 and the chamber within the cylindrical body 102.

A second optical fiber cable 122 may be connected to the optical fiber output port 116. The second optical fiber cable 122 may have a first end connected to a second optical fiber ferrule 124 and a second end connected to a laser light receiver. The second optical fiber ferrule 124 may provide the interface for coupling laser light from the spectroscopy gas cell 100 into the second optical fiber cable 122 through the optical fiber output port 116. The second optical fiber ferrule 124 may be configured to mate with the optical fiber output port 116 to collect laser light that has passed through the chamber.

The configuration of the optical fiber input port 114 and optical fiber output port 116 at opposing ends of the cylindrical body 102 may establish an optical path through the spectroscopy gas cell 100. This arrangement may enable laser light to enter through the first optical fiber ferrule 120, interact with gas samples within the chamber by reflecting many times between two high finesse mirrors, and exit through the second optical fiber ferrule 124 for subsequent analysis. The fiber-optic coupling approach may provide advantages in terms of system flexibility and alignment stability compared to free-space optical configurations.

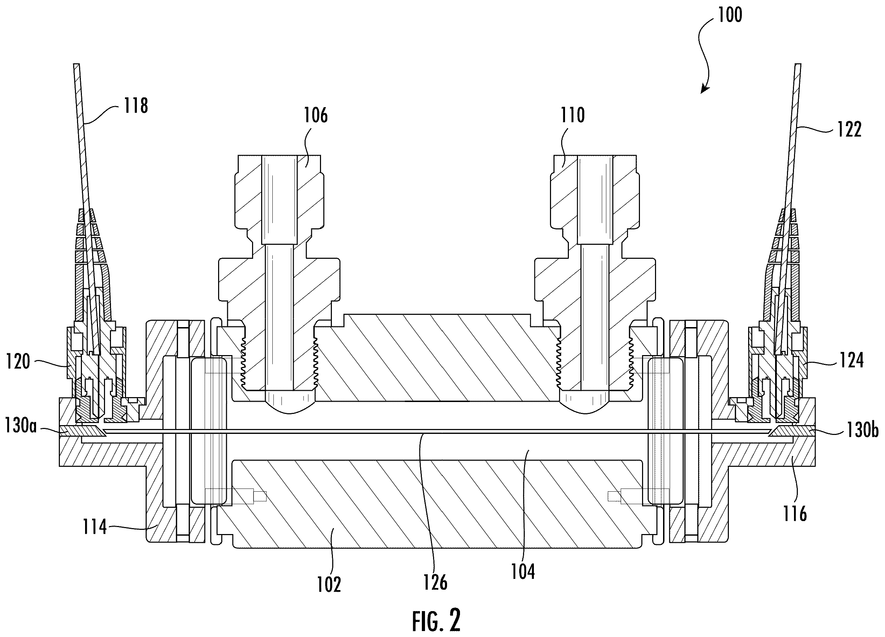

Referring to FIG. 2, the spectroscopy gas cell 100 may include a resonant cavity 104 extending longitudinally through the interior of the cylindrical body 102. The resonant cavity 104 may be defined by the internal dimensions of the cylindrical body 102 and may provide a chamber where laser light 126 may interact with gas samples introduced through the gas inlet 106 and removed through the gas outlet 110. The resonant cavity 104 may be configured as a resonant cavity enhanced spectroscopy system with high finesse mirrors to achieve equivalent sensing path lengths over 7500 meters within a physical cavity length of approximately 75 millimeters.

As shown in FIG. 2, a first off-axis ellipsoidal reflector 130a may be positioned within the optical fiber input port 114. The first off-axis ellipsoidal reflector 130a may be positioned adjacent to the first optical fiber ferrule 120 and may be configured to receive laser light 126 emitted from the first optical fiber ferrule 120. The first off-axis ellipsoidal reflector 130a may be positioned to reflect laser light 126 from the first optical fiber ferrule 120 into the resonant cavity 104. In some cases, the first off-axis ellipsoidal reflector 130a may receive diverging laser light 126 that emerges from the end of the first optical fiber ferrule 120 and may redirect the diverging laser light 126 into a focused beam directed toward the center of the resonant cavity 104.

The spectroscopy gas cell 100 may further include a second off-axis ellipsoidal reflector 130b positioned within the optical fiber output port 116. The second off-axis ellipsoidal reflector 130b may be positioned adjacent to the second optical fiber ferrule 124 and may be configured to receive laser light 126 that has traveled through the resonant cavity 104. The second off-axis ellipsoidal reflector 130b may be positioned to reflect the laser light 126 from the resonant cavity 104 toward the second optical fiber ferrule 124 to output the laser light 126 from the resonant cavity 104. The second off-axis ellipsoidal reflector 130b may collect laser light 126 exiting the resonant cavity 104 and may focus the laser light 126 into the second optical fiber ferrule 124 for transmission through the second optical fiber cable 122.

The off-axis ellipsoidal reflectors 130a, 130b may have two foci which may image the laser Gaussian beam waist from one to the other without aberration for aberration-free coupling over the entire wavelength range. The first off-axis ellipsoidal reflector 130a may position one focal point at the end of the first optical fiber ferrule 120 and may direct laser light 126 to a second focal point located within the resonant cavity 104. Similarly, the second off-axis ellipsoidal reflector 130b may receive laser light 126 from a focal point within the resonant cavity 104 and may redirect the laser light 126 to a focal point at the end of the second optical fiber ferrule 124. This dual-focal configuration may provide perfect laser beam mode matching between the optical fiber and resonant cavity for highest coupling efficiency.

The optical path illustrated in FIG. 2 may demonstrate how laser light 126 travels from the first optical fiber ferrule 120, reflects off the first off-axis ellipsoidal reflector 130a, passes through the resonant cavity 104, reflects off the second off-axis ellipsoidal reflector 130b, and enters the second optical fiber ferrule 124. Within the resonant cavity 104, the laser light 126 may undergo multiple reflections between highly reflective mirrors, creating an extended interaction path with gas molecules present in the chamber. This resonant cavity enhancement mechanism may achieve detection of trace gas concentrations through multiple reflections and extended light-gas interaction distances over 1000 meters of effective photon travel within the compact physical dimensions of the spectroscopy gas cell 100.

The use of off-axis ellipsoidal reflectors 130a, 130b instead of refractive lens systems may provide chromatic aberration-free focusing and collimation of the laser light 126 across a broad range of wavelengths. This reflective optics approach may enable broadband spectroscopic gas sensing within the resonant cavity 104, allowing the spectroscopy gas cell 100 to analyze multiple gas species without requiring wavelength-specific optical components or system reconfiguration.

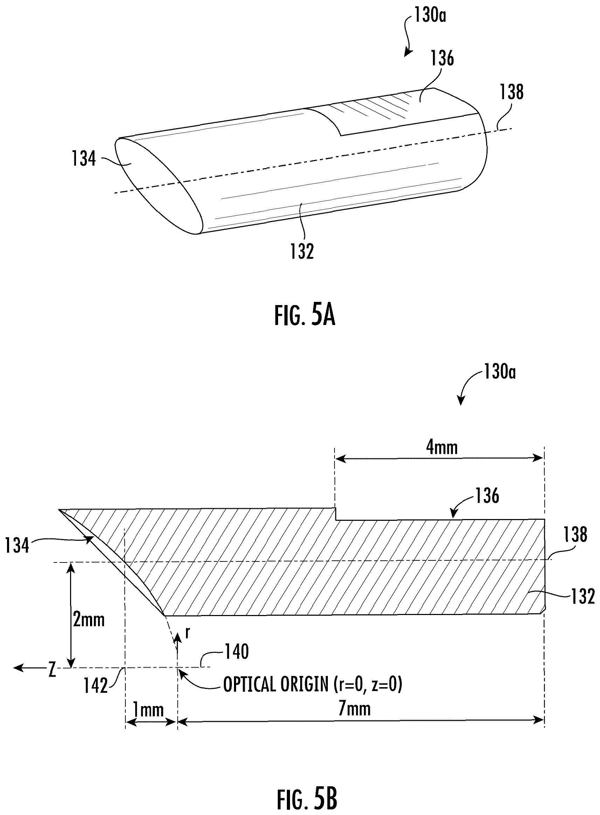

Referring to FIGS. 5A and 5B, the first off-axis ellipsoidal reflector 130a may include detailed structural features that enable broadband chromatic aberration-free operation. While FIGS. 5A and 5B illustrate in detail the first off-axis ellipsoidal reflector 130a, it should be appreciated that the second off-axis ellipsoidal reflector 130b is identical to the first off-axis ellipsoidal reflector 130a.

As shown in FIG. 5A, the first off-axis ellipsoidal reflector 130a may comprise an off-axis ellipsoidal reflector body 132 having a generally cylindrical form. The off-axis ellipsoidal reflector body 132 may provide the mechanical structure for mounting and positioning the reflective surface within the optical fiber input port 114. The off-axis ellipsoidal reflector body 132 may include an off-axis ellipsoidal reflector orientation notch 136 formed on one side of the cylindrical surface. The off-axis ellipsoidal reflector orientation notch 136 may provide a mechanical feature for alignment and orientation during assembly of the spectroscopy gas cell 100.

An off-axis ellipsoidal reflector longitudinal axis 138 may extend through the center of the off-axis ellipsoidal reflector body 132, defining the primary mechanical axis of the reflector component. The off-axis ellipsoidal reflector body 132 may terminate at an off-axis ellipsoidal reflector end 139, which may define one axial boundary of the component. The cylindrical geometry of the off-axis ellipsoidal reflector body 132 may facilitate integration with the optical fiber input port 114, while the off-axis ellipsoidal reflector orientation notch 136 may ensure proper rotational alignment of the reflective surface relative to the optical path.

With reference to FIG. 5B, the first off-axis ellipsoidal reflector 130a may include a concave ellipsoidal reflective face 134 formed on one end of the off-axis ellipsoidal reflector body 132. The concave ellipsoidal reflective face 134 may have an ellipsoidal curvature configured to focus and redirect the laser light 126. The concave ellipsoidal reflective face 134 may be positioned such that laser light 126 entering at one focal point may be reflected and focused to a second focal point within the resonant cavity 104.

As further shown in FIG. 5B, an ellipsoidal axis 140 may be offset from the off-axis longitudinal axis 138 by approximately 2 millimeters, defining the "off-axis" characteristic of the first off-axis ellipsoidal reflector 130a. A focal point 142 may be located at a position along the ellipsoidal axis 140, corresponding to one of the two focal points of the ellipsoidal surface geometry. The off-axis configuration may enable the first off-axis ellipsoidal reflector 130a to redirect laser light 126 from the first optical fiber ferrule 120 at an angle while maintaining precise focusing characteristics.

The first off-axis ellipsoidal reflector 130a and the second off-axis ellipsoidal reflector 130b may comprise aluminum. In some cases, the first off-axis ellipsoidal reflector 130a and the second off-axis ellipsoidal reflector 130b may comprise silver-coated aluminum. The aluminum construction may provide structural stability and thermal properties suitable for spectroscopic applications, while the silver coating may provide high reflectivity across a broad wavelength range. The metallic reflective surface may treat all wavelengths substantially equally without introducing chromatic aberration, enabling broadband operation of the spectroscopy gas cell 100.

The first off-axis ellipsoidal reflector 130a and the second off-axis ellipsoidal reflector 130b may have a radius of curvature of about two millimeters and a conic constant of about 0.9. In some cases, the first off-axis ellipsoidal reflector 130a and the second off-axis ellipsoidal reflector 130b may have a radius of curvature of 1.967 millimeters and a conic constant of 0.936. The radius of curvature and conic constant values may define the mathematical form of the ellipsoidal surface, determining the focusing properties and optical performance of the reflectors. The conic constant may describe the deviation from sphericity, with the ellipsoidal surface geometry providing the dual-focal characteristics for aberration-free imaging.

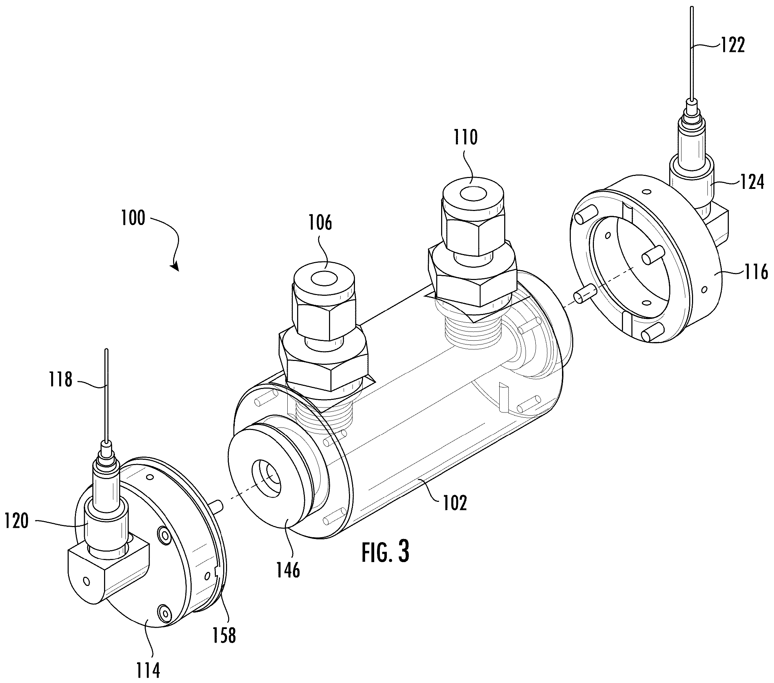

Referring to FIG. 3, the spectroscopy gas cell 100 is shown in a partially exploded isometric view that illustrates the spatial relationships between the main components of the gas cell 100. The exploded view may demonstrate how the various components may be arranged along a common axis and how the components may fit together to form the assembled spectroscopy gas cell 100. The cylindrical body 102 may serve as the central structural element around which the other components may be positioned during assembly.

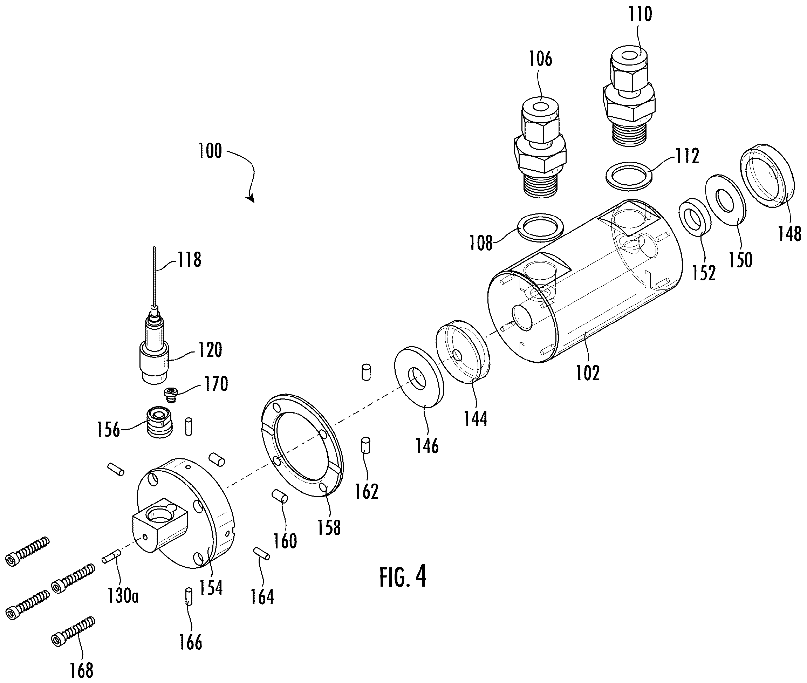

Referring to FIG. 4, the spectroscopy gas cell 100 may be shown in a detailed exploded isometric view that illustrates the arrangement and relationship of components within the resonant cavity system and the five-degree-of-freedom adjustment mechanisms. The exploded view may demonstrate how the various optical, mechanical, and gas handling components may be assembled to form the integrated spectroscopy gas cell 100 with precise alignment capabilities. Details of the optical fiber output port 116 are omitted from FIG. 4 due to the similarities between the optical fiber output port 116 and the optical fiber input port 114.

The spectroscopy gas cell 100 may include a first mirror 144 and a second mirror 148 that may form the resonant cavity mirrors within the cylindrical body 102. The first mirror 144 and the second mirror 148 may be dielectric coated mirrors with higher than 99.999% broadband reflectivity. In some cases, the first mirror 144 and the second mirror 148 may achieve higher than 300,000 finesse for an enhancement factor higher than 100,000. The high reflectivity and finesse characteristics of the first mirror 144 and the second mirror 148 may enable the resonant cavity 104 to achieve equivalent gas sensing path lengths of 7.5 kilometers through multiple reflections of the laser light 126 within the compact physical dimensions of the spectroscopy gas cell 100.

As shown in FIG. 4, the mirror back ring 146 may provide support for the first mirror 144 within the assembly. A piezo spacer 150 and a piezo ring actuator 152 may be positioned between the second mirror 148 and the cylindrical body 102. The piezo ring actuator 152 may enable precise adjustment of the mirror spacing to maintain resonance conditions within the resonant cavity 104. In some cases, the piezo ring actuator 152 may precisely lock the resonant Free Spectral Range (FSR) to the comb laser source for resonant locking. The piezo ring actuator 152 may provide nanometer-level control of the cavity length to accommodate different wavelengths and maintain optimal resonance conditions across the broadband wavelength range.

The spectroscopy gas cell 100 may include a gas inlet gasket 108 positioned at the gas inlet 106 and a gas outlet gasket 112 positioned at the gas outlet 110. The gas inlet gasket 108 and the gas outlet gasket 112 may provide sealing interfaces for the gas handling system, enabling controlled introduction and removal of gas samples while maintaining the integrity of the resonant cavity 104. The gaskets may prevent gas leakage and may ensure that the gas sample remains contained within the resonant cavity 104 during spectroscopic analysis.

As further shown in FIG. 4, the optical fiber input port 114 may include an optical fiber input port cap 154 that may secure the alignment components in place. The first optical fiber cable 118 may connect to a PC/APC connector 156 through the first optical fiber ferrule 120. The PC/APC connector 156 may provide a standardized interface for optical fiber connections and may incorporate an angled polish to minimize back reflections that could interfere with the laser source. The angled connector configuration may prevent unwanted reflections from the fiber end surface from traveling back into the laser source, which could create complications or damage to the laser system.

The spectroscopy gas cell 100 may incorporate a five-degree-of-freedom adjustment system that may enable precise alignment of the optical components. The alignment spacer 158 may surround the first off-axis ellipsoidal reflector 130a and may provide adjustment mechanisms for precise optical alignment. The alignment spacer 158 may host two pairs of rollers for translations along X and Y directions and rotations around X and Y axes. Specifically, the alignment spacer 158 may incorporate X-axis rollers 160 and Y-axis rollers 162 that may enable translational movement in the X and Y directions respectively.

The five-degree-of- freedom adjustment system may include X-direction translation set screws 164 and Y-direction translation set screws 166 that may control the translational positioning of the optical components. The X-direction translation set screws 164 may adjust the position of the optical fiber input port 114 along the X-axis, while the Y-direction translation set screws 166 may adjust the position along the Y-axis. These translational adjustments may enable precise alignment of the laser beam to the resonant optical path within the resonant cavity 104.

The adjustment system may further include X, Y-axis rotation cap screws 168 that may adjust the rotational orientation around the X and Y axes. The X, Y-axis rotation cap screws 168 may enable angular adjustments to align the laser beam with the resonant center line direction. The rotational adjustments provided by the X, Y-axis rotation cap screws 168 may work in conjunction with the translational adjustments to achieve optimal beam alignment within the resonant cavity 104.

An optical fiber focusing cap screw 170 may adjust the axial position of the first optical fiber ferrule 120 to control the focusing characteristics of the laser light 126. The optical fiber focusing cap screw 170 may provide adjustment of the fiber end distance to position the Gaussian beam waist to the center of the resonant cavity 104. In some cases, the first off-axis ellipsoidal reflector 130a may be adapted to reflect the laser light 126 such that a waist of the laser light 126 may be positioned about midway between the first off-axis ellipsoidal reflector 130a and the second off-axis ellipsoidal reflector 130b. The optical fiber focusing cap screw 170 may enable fine adjustment of the beam waist position to achieve optimal mode matching between the optical fiber and the resonant cavity 104.

The optical fiber input port 114 and the optical fiber output port 116 may each have five-degree-of-freedom of adjustment through the combination of the X-direction translation set screws 164, Y-direction translation set screws 166, X, Y-axis rotation cap screws 168, and optical fiber focusing cap screw 170. These five-degree-of-freedom of adjustment may include X and Y direction translations, X and Y axis tilts, and fiber end focusing adjustment. The five-degree-of-freedom adjustment capability may enable the laser beam to be aligned to the resonant cavity optical axis with the highest coupling efficiency and perfect mode matching across the broadband wavelength range.

The integrated design shown in FIG. 4 may demonstrate how the resonant cavity mirrors, piezo actuation system, gas handling components, and five-degree-of-freedom adjustment mechanisms may be assembled together to form a compact and precisely controllable spectroscopy gas cell 100. The combination of off-axis ellipsoidal reflectors, high-finesse mirrors, precise piezo control, and multi-axis adjustment capability may enable the spectroscopy gas cell 100 to achieve broadband resonant cavity enhanced spectroscopy with optimal performance across a wide range of wavelengths and gas species.

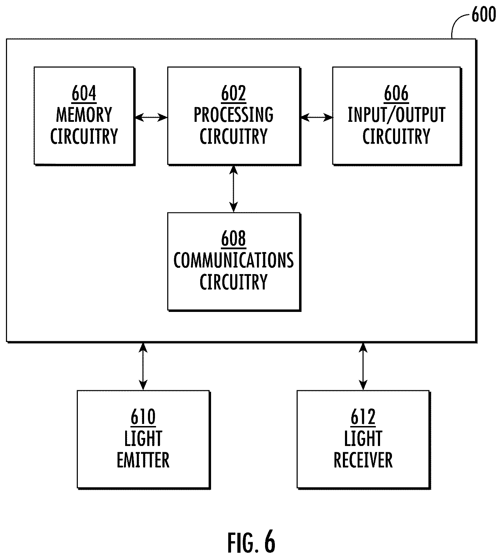

Referring to FIG. 6, a control device 600 may be configured to operate and coordinate the components of a spectroscopic gas sensing system. The control device 600 may include processing circuitry 602 that may serve as the central computational element for controlling system operations and analyzing spectroscopic data. The processing circuitry 602 may be configured to execute control algorithms, process measurement signals, and coordinate the timing of laser emission and detection operations.

The control device 600 may further include memory circuitry 604 that may store data and instructions for operation of the control device 600. The memory circuitry 604 may retain calibration parameters, spectroscopic reference data, measurement results, and software instructions that may be executed by the processing circuitry 602. In some cases, the memory circuitry 604 may store algorithms for analyzing spectroscopic signals and determining gas concentrations based on absorption measurements.

As shown in FIG. 6, the control device 600 may include input/output circuitry 606 that may facilitate interaction with external devices and user interfaces. The input/output circuitry 606 may enable data exchange between the control device 600 and external systems, allowing for configuration of measurement parameters, retrieval of measurement results, and system status monitoring. The input/output circuitry 606 may provide interfaces for connecting to display devices, data storage systems, or network connections for remote monitoring and control.

The control device 600 may also include communications circuitry 608 that may enable data transmission and reception with other system components. The communications circuitry 608 may be connected to the processing circuitry 602, memory circuitry 604, and input/output circuitry 606, enabling coordinated data exchange and system control functions. The communications circuitry 608 may facilitate communication protocols for controlling laser sources, receiving detector signals, and coordinating measurement sequences.

With continued reference to FIG. 6, the control device 600 may be operatively connected to a laser light emitter 610 and a laser light receiver 612. The laser light emitter 610 may generate laser light that may be directed into the spectroscopy gas cell 100 through the first optical fiber cable 118 and first optical fiber ferrule 120. In some cases, the laser light emitter 610 may be configured to emit broadband laser light across multiple wavelengths to enable detection of various gas species within a single measurement system. The laser light emitter 610 may be controlled by the control device 600 through the communications circuitry 608 to coordinate emission timing, wavelength selection, and power levels.

The laser light receiver 612 may detect laser light output from the spectroscopy gas cell 100 through the second optical fiber ferrule 124 and second optical fiber cable 122. The laser light receiver 612 may convert optical signals into electrical signals that may be processed by the control device 600 to determine spectroscopic characteristics of gas samples. In some cases, the laser light receiver 612 may be configured to detect broadband optical signals across the same wavelength range as the laser light emitter 610, enabling comprehensive spectroscopic analysis of multiple gas species.

The communications circuitry 608 may communicate with both the laser light emitter 610 and the laser light receiver 612 to coordinate system operations. The communications circuitry 608 may transmit control signals to the laser light emitter 610 to initiate laser emission sequences and may receive measurement signals from the laser light receiver 612 for subsequent processing. This bidirectional communication capability may enable the control device 600 to synchronize laser emission and detection operations for optimal measurement accuracy.

The processing circuitry 602 may process signals received from the laser light receiver 612 to determine characteristics of gas samples within the resonant cavity 104. The processing circuitry 602 may analyze the intensity, wavelength dependence, and temporal characteristics of the detected optical signals to calculate gas concentrations, identify gas species, and assess measurement quality. In some cases, the processing circuitry 602 may determine gas concentrations based on the measured optical absorption and the known effective path length within the resonant cavity 104.

The control device 600 may coordinate the operation of the laser light emitter 610 and may monitor the output detected by the laser light receiver 612 to perform spectroscopic analysis of gas samples. The control device 600 may execute measurement sequences that may involve sweeping the laser wavelength across the broadband range, controlling the piezo ring actuator 152 to maintain resonance conditions, and analyzing the resulting absorption spectra to identify and quantify gas species present in the resonant cavity 104. The integrated control approach may enable automated operation of the spectroscopic gas sensing system with minimal user intervention while maintaining high measurement accuracy and repeatability.

During operation of the spectroscopic gas sensing system, the components may interact in a coordinated sequence to perform broadband spectroscopic analysis of gas samples. The laser light emitter may generate broadband laser light that may be transmitted through the first optical fiber cable to the first optical fiber ferrule. The laser light may emerge from the end of the first optical fiber ferrule as a diverging beam due to the numerical aperture characteristics of the optical fiber.

The diverging laser light may encounter the first off-axis ellipsoidal reflector, which may collect the diverging light and may redirect the light toward the resonant cavity. The ellipsoidal geometry of the first off-axis ellipsoidal reflector may focus the laser light to form a beam waist at the center of the resonant cavity, where the light may interact with gas molecules present in the chamber. The off-axis configuration may enable the reflector to redirect the light at an angle while maintaining precise focusing characteristics across the broadband wavelength range.

Within the resonant cavity, the laser light may undergo multiple reflections between the first mirror and the second mirror. Each reflection may extend the effective optical path length, allowing the laser light to interact with gas molecules over distances that may exceed the physical dimensions of the cavity by several orders of magnitude. The high reflectivity of the dielectric coated mirrors may enable hundreds of thousands of reflections, creating effective path lengths approaching several kilometers within the compact cavity structure.

As the laser light traverses the resonant cavity multiple times, gas molecules present in the chamber may absorb specific wavelengths of light according to their molecular absorption characteristics. The absorption may reduce the intensity of the laser light at wavelengths corresponding to the absorption lines of the gas species present in the sample. The magnitude of the absorption may depend on the gas concentration, the absorption cross-section of the gas molecules, and the effective path length achieved through the multiple reflections within the resonant cavity.

The laser light that exits the resonant cavity may be collected by the second off-axis ellipsoidal reflector, which may redirect the light toward the second optical fiber ferrule. The second off-axis ellipsoidal reflector may focus the light from the beam waist position within the resonant cavity into the end of the second optical fiber ferrule. The ellipsoidal geometry may provide efficient coupling of the light into the second optical fiber cable, which may transmit the light to the laser light receiver for detection and analysis.

The laser light receiver may convert the optical signals into electrical signals that may be processed by the control device to determine the spectroscopic characteristics of the gas sample. The processing circuitry may analyze the wavelength-dependent absorption to identify gas species and may calculate gas concentrations based on the measured absorption and the known effective path length within the resonant cavity.

The reflective optics design may provide several advantages over conventional refractive lens systems. The elimination of chromatic aberration through the use of metallic reflective surfaces may enable broadband operation across a wide range of wavelengths without the focusing errors that would occur with refractive lenses. This chromatic aberration-free performance may allow the system to analyze multiple gas species sequentially or simultaneously without requiring wavelength-specific optical components or system reconfiguration.

The broadband capability may enable the detection of multiple gas species without requiring multiple sensors, reducing system complexity and cost while expanding the range of detectable gases within a single instrument. Conventional systems may require separate sensors optimized for different wavelength ranges, each with its own optical components and calibration requirements. The broadband reflective optics approach may eliminate these limitations by providing consistent optical performance across the entire wavelength range of interest.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A spectroscopic gas cell comprising:
a cylindrical body defining a chamber for receiving a gas to be analyzed;
an inlet via which the gas to be analyzed is added to the chamber;
an outlet via which the gas to be analyzed is removed from the chamber;
an optical fiber input port affixed to and closing off a first end of the cylindrical body and adapted to selectively connect to a first optical fiber ferrule to input laser light into the chamber;
an optical fiber output port affixed to and closing off a second end of the cylindrical body and adapted to selectively connect to a second optical fiber ferrule;
a first off-axis ellipsoidal reflector positioned within the optical fiber input port and positioned to reflect laser light from the first optical fiber ferrule into the chamber; and
a second off-axis ellipsoidal reflector positioned within the optical fiber output port and positioned to reflect the laser light from the chamber toward the second optical fiber ferrule to output the laser light from the chamber.

2. The gas cell of claim 1, wherein each of the first and second off-axis ellipsoidal reflectors comprise aluminum.

3. The gas cell of claim 2, wherein each of the first and second off-axis ellipsoidal reflectors comprise silver-coated aluminum.

4. The gas cell of claim 1, wherein each of the first and second off-axis ellipsoidal reflectors has a radius of curvature of about two millimeters and a conic constant of about 0.9.

5. The gas cell of claim 4, wherein each of the first and second off-axis ellipsoidal reflectors has a radius of curvature of 1.967 millimeters and a conic constant of 0.936.

6. The gas cell of claim 1, wherein the first off-axis ellipsoidal reflectors is adapted to reflect the laser light such that a waist of the laser light is positioned about midway between the first second off-axis ellipsoidal reflector and the second off-axis ellipsoidal reflector.

7. The gas cell of claim 1, wherein each of the optical fiber input port and the optical fiber output port have five-degree-of-freedom of adjustment.

8. A system for gas spectroscopy, the system comprising:
a laser light emitter for emitting laser light
a first optical fiber cable having a first end connected to the laser light emitter and a second end connected to a first optical fiber ferrule;
a laser light receiver for receiving the laser light;
a second optical fiber cable having a first end connected to a second optical fiber ferrule and a second end connected to the laser light receiver; and
a spectroscopic gas cell comprising:
a cylindrical body defining a chamber for receiving a gas to be analyzed;
an inlet via which the gas to be analyzed is added to the chamber;
an outlet via which the gas to be analyzed is removed from the chamber;
an optical fiber input port affixed to and closing off a first end of the cylindrical body and connected to the first optical fiber ferrule to input the emitted laser light into the chamber;
an optical fiber output port affixed to and closing off a second end of the cylindrical body and connected to the second optical fiber ferrule;
a first off-axis ellipsoidal reflector positioned within the optical fiber input port and positioned to reflect laser light from the first optical fiber ferrule into the chamber; and
a second off-axis ellipsoidal reflector positioned within the optical fiber output port and positioned to reflect the laser light from the chamber toward the second optical fiber ferrule to output the laser light from the chamber.

9. The system of claim 8, wherein each of the first and second off-axis ellipsoidal reflectors comprise aluminum.

10. The system of claim 8, wherein each of the first and second off-axis ellipsoidal reflectors comprise silver-coated aluminum.

11. The system of claim 8, wherein each of the first and second off-axis ellipsoidal reflectors has a radius of curvature of about two millimeters and a conic constant of about 0.9.

12. The system of claim 11, wherein each of the first and second off-axis ellipsoidal reflectors has a radius of curvature of 1.967 millimeters and a conic constant of 0.936.

13. The system of claim 8, wherein the first off-axis ellipsoidal reflectors is adapted to reflect the laser light such that a waist of the laser light is positioned about midway between the first second off-axis ellipsoidal reflector and the second off-axis ellipsoidal reflector.

14. The system of claim 8, wherein each of the optical fiber input port and the optical fiber output port have five-degree-of-freedom of adjustment.

15. A method of gas spectroscopy comprising:
providing a spectroscopic gas cell comprising:
a cylindrical body defining a chamber for receiving a gas to be analyzed;
an inlet via which the gas to be analyzed is added to the chamber;
an outlet via which the gas to be analyzed is removed from the chamber;
an optical fiber input port affixed to and closing off a first end of the cylindrical body;
an optical fiber output port affixed to and closing off a second end of the cylindrical body;
a first off-axis ellipsoidal reflector positioned within the optical fiber input port; and
a second off-axis ellipsoidal reflector positioned within the optical fiber output port;
connecting a laser light emitter to the optical fiber input port via a first optical fiber cable having a first end connected to the laser light emitter and a second end connected to a first optical fiber ferrule;
connecting a laser light receiver to the optical fiber output port via a second optical fiber cable having a first end connected to a second optical fiber ferrule and a second end connected to the laser light receiver; and
emitting broadband laser light from the laser light emitter such that the emitted laser light enters the optical fiber input port via the first optical fiber ferrule;
wherein the emitted laser light that enters the optical fiber input port is reflected by the first off-axis ellipsoidal reflector into the chamber; and
wherein the laser light reflected into the chamber by the first off-axis ellipsoidal reflector reflects off the second off-axis ellipsoidal reflector toward the second optical fiber ferrule to output the laser light from the chamber.
